# FASCICULE DE BREVET EUROPEEN

(11) **EP 3 594 625 B1**
(45) Date de publication et mention de la délivrance du brevet: **01.09.2021**
(21) Numéro de dépôt: 19185395.1
(22) Date de dépôt: 10.07.2019
(51) Int. Cl.: G01C 23/00

(54) **AÉRONEF ET SYSTÈME DE SIGNALISATION D'UNE AIRE D'ATTÉRRISSAGE NON PRÉPARÉE**
LUFTFAHRZEUG UND SIGNALISIERUNGSSYSTEM EINES NICHT VORBEREITETEN LANDEBEREICHS
AIRCRAFT AND SIGNALLING SYSTEM OF AN UNPREPARED LANDING AREA

(30) Priorité: 13.07.2018 FR 1800740
(43) Date de publication de la demande: 15.01.2020
(73) Titulaire: Airbus Helicopters, 13725 Marignane Cedex (FR)
(72) Inventeur: BAUDRY, Jean-Pierre, 83200 Toulon (FR)
(74) Mandataire: GPI & Associés

(56) Documents cités:
- EP-A1- 3 217 148
- EP-A2- 2 116 811
- US-A- 5 289 185

## Description

La présente invention concerne un aéronef et un système de signalisation d'une aire d'atterrissage éventuellement non préparée à cet effet, et en particulier un aéronef muni d'une voilure tournante.

Lors d'un atterrissage le souffle de la voilure tournante peut soulever de manière soudaine et à proximité du sol des particules présentes sur le sol. Ces particules peuvent former un nuage qui aveugle subitement le pilote en ce qui concerne la visibilité de l'environnement à l'extérieur du cockpit. En particulier, lorsque l'aéronef doit se poser sur une zone sablonneuse, poussiéreuse (terrains secs) ou enneigée, un nuage de sable ou de neige peut envelopper l'aéronef et peut obscurcir le champ de visualisation à l'extérieur du cockpit du pilote. Un tel phénomène est dénommé parfois en langue anglaise « brown-out » en présence de sable / poussière et « white-out » en présence de neige.

Bien que les pilotes y soient préparés, ce phénomène peut provoquer des accidents. En effet, le pilote est parfois surpris au moment de l'apparition de particules qui obscurcissent de façon soudaine et inopinée son champ de visualisation hors cockpit. Le pilote risque alors de perdre ses références visuelles et peut engager une manœuvre conduisant à un accident de type collision avec le sol et/ou un obstacle. Ainsi, la proximité du sol et d'éventuels obstacles rendent de fait dangereuse une manœuvre incontrôlée du pilote.

Les documents WO2009/081177 et EP 3 217 148 décrivent un procédé pour faciliter un atterrissage. Ce procédé comporte les étapes de détermination du point d'atterrissage souhaité en fonction de la ligne de vision d'un pilote, de détermination de l'emplacement du point d'atterrissage par rapport à l'aéronef, de génération d'affichage et de mise à jour de symboles conformes référencés au sol fournissant une représentation de la zone d'atterrissage. Ces symboles comportent un unique cercle, un « H » et une pluralité de cônes, chaque cône comprenant une base reposant sur le cercle et des disques représentant diverses hauteurs. Par exemple, quatre cônes sont placés sur le cercle au niveau des quatre points cardinaux, quatre autres cônes sont placés entre eux. D'autres symboles sont envisagés.

Bien qu'efficaces, un nombre excessif de symboles peut saturer la vision d'un pilote.

Le document WO2005/015333 décrit un système comprenant des senseurs recevant des informations relatives à des conditions environnementales et une unité de traitement qui traite ces informations pour assister un pilote.

Le document EP 2116811 est éloigné de l'invention en ayant pour objet un système de guidage d'avion

Le document US 5289185 est aussi connu.

La présente invention a alors pour objet de proposer un procédé relativement intuitif pour aider le pilote à visualiser la position d'une aire d'atterrissage éventuellement non préparée, et l'atteindre, notamment en présence de particules qui obscurcissent son champ de visualisation de l'environnement hors du cockpit.

L'invention vise ainsi un procédé d'aide au pilotage pour atterrir sur une zone dite « zone cible » par commodité avec un aéronef. Ce procédé comporte les étapes de :
- désignation d'un point de posé,
- détermination d'un axe de visée avec un calculateur embarqué,
- affichage sur un écran en superposition du monde réel ou d'une représentation du monde réel et dans un champ de visualisation dirigé selon ledit axe de visée d'au moins une partie d'un unique symbole principal en trois dimensions fournissant une position conforme du point de posé tant que ladite au moins une partie est dans le champ de visualisation, ledit symbole principal en trois dimensions s'étendant en élévation du sol vers le haut d'une zone inférieure positionnée sur le sol jusqu'à une zone sommitale positionnée à une hauteur de sommet par rapport au sol, et
- au moins lorsque l'aéronef est situé à une distance inférieure à une première distance seuil du point de posé, affichage sur l'écran d'au moins une portion d'au moins un symbole principal en deux dimensions tant que ladite au moins une portion est dans le champ de visualisation, ledit au moins un symbole principal en deux dimensions couvrant ladite zone cible,
le procédé étant en outre caractérisé en ce qu'à chaque instant ledit symbole principal en trois dimensions comprend un trait de hauteur mobile en fonction de la hauteur courante de l'aéronef, le trait de hauteur étant positionné à la hauteur courante de l'aéronef entre la zone inférieure et la zone sommitale tant que cette hauteur courante de l'aéronef est inférieure à la hauteur de sommet, le trait de hauteur étant positionné au niveau de la zone sommitale du symbole principal en trois dimensions tant qu'une hauteur de l'aéronef est supérieure ou égale à la hauteur de sommet.

L'expression « dirigé selon ledit axe de visée » signifie que le champ de visualisation représente un espace vu selon cet axe de visée. Par exemple, le champ de visualisation représente une fenêtre centrée sur l'axe de visée.

L'expression « positionnée sur le sol » indique que la zone inférieure est sensiblement positionnée à une hauteur nulle par rapport au sol.

Le terme « distance » peut faire référence à une distance au sol en ligne droite, et peut donc représenter une distance séparant le point de posé d'une projection sur le sol d'un autre point et par exemple de l'aéronef.

L'écran peut être un afficheur tête basse (écran, ..) ou tête haute usuel (casque, lunettes, projection sur parebrise, écrans transparents, ...).

Dès lors, selon ce procédé un point de posé cible est désigné, par exemple par un pilote via des moyens usuels.

Le calculateur embarqué détermine l'axe de visée et génère des symboles principaux qui sont attachés au point de posé. Lorsque ces symboles principaux entrent dans le champ de visualisation et selon éventuellement d'autres critères, les symboles principaux sont affichés sur l'écran. Les dimensions et/ou, la forme et les éléments des symboles à afficher dépendent de la position de l'aéronef et de l'axe de visée par rapport au point de posé.

Le monde réel peut par exemple être affiché sur l'écran au travers d'une représentation synthétique ou encore peut être vu par transparence au travers de l'écran.

Ainsi, lorsque le point de posé est désigné par le pilote ou reçu via par exemple une liaison de données, une symbologie dédiée est générée et positionnée par rapport à la position de posé et superposée conforme au monde extérieur.

Cette symbologie comporte une symbologie en trois dimensions conforme qui inclut le symbole principal en trois dimensions. Ce symbole principal en trois dimensions est affiché suite à la désignation du point de posé pour visualiser où se trouve le point de posé par rapport à l'aéronef.

De plus, lorsque l'aéronef est situé à une distance inférieure à une première distance seuil du point de posé, le calculateur requiert l'affichage d'une symbologie en deux dimensions conforme qui inclut au moins un symbole principal en deux dimensions. Cette symbologie en deux dimensions peut couvrir une aire d'atterrissage de l'ordre de l'aire d'un Héliport usuel et/ou peut être affichée progressivement.

La symbologie en deux dimensions permet à un pilote d'évaluer facilement et visuellement un écart éventuel (par exemple dû à une dérive latérale inopinée de l'aéronef) par rapport au point de posé. La symbologie en trois dimensions permet d'évaluer précisément la position du point de posé, voire peut permettre à un pilote d'évaluer visuellement la hauteur et un angle de roulis de l'aéronef.

Le pilote reste libre de poser l'aéronef où il le souhaite. Toutefois si un nuage de particules se forme à proximité du sol, le pilote est assisté de façon naturelle par les symboles affichés qui peuvent lui fournir les informations nécessaires et suffisantes conformes pour se poser, à savoir une position de la zone d'atterrissage choisie par rapport à l'aéronef, ainsi que des informations graphiques de la hauteur sol et du roulis de l'aéronef. Ces informations sont exploitables quelles que soient les conditions de visibilité et notamment lors des dégradations de visibilité soudaines et non prévues.

Ce procédé permet de fournir au pilote un ensemble d'informations intuitives lui permettant d'obtenir une prise de conscience optimisée de la situation et/ou du positionnement de l'aéronef par rapport au point de posé désigné. Libre à lui de réaliser la manœuvre qui lui semble la plus adéquate.

Le procédé d'aide au pilotage peut donc être un procédé sans contrainte imposée pour atterrir, et par exemple peut être dépourvu d'une étape d'affichage d'une information « Directeur de Vol » à suivre par le pilote,

L'utilisation d'un jeu de symboles affichés successivement et qui inclut un unique symbole principal en trois dimensions et de symboles principaux en deux dimensions peut alors conduire à une symbologie épurée qui ne masque pas l'environnement extérieur et donc qui est facilement compréhensible par un pilote dans une phase potentiellement anxiogène.

Le procédé peut de plus comporter une ou plusieurs des caractéristiques qui suivent

Selon un aspect, le procédé peut comporter une étape de détermination d'une ligne de vision d'un pilote dudit aéronef avec un détecteur de posture, notamment des mouvements de la tête du pilote, ledit axe de visée étant confondu avec ladite ligne de vision.

Cette caractéristique permet par exemple d'utiliser un écran disposé sur un casque et de positionner le point de posé par rapport au champ de visualisation du pilote.

Alternativement, l'axe de visée peut correspondre à un axe de l'aéronef, par exemple un axe positionné selon le vecteur vitesse de l'aéronef.

Selon un aspect, le symbole principal en trois dimensions peut comporter un cône principal inversé, ledit cône principal s'étendant de bas en haut d'un sommet du cône principal formant la zone inférieure jusqu'à une base formant la zone sommitale.

Cette forme en cône inversé permet de désigner précisément le point de posé.

La zone sommitale peut couvrir une aire qui varie en fonction de la précision d'un système, et par exemple d'un système de localisation de la position de l'aéronef dans l'espace.

Selon un aspect, ladite hauteur de sommet peut être égale à une hauteur prédéterminée ou à une hauteur de l'aéronef au moment de ladite désignation du point de posé.

Selon un exemple, la hauteur prédéterminée peut correspondre à une hauteur de consigne à laquelle l'aéronef doit effectuer un vol stationnaire avant de se poser.

Selon un autre exemple, la zone sommitale du symbole principal en trois dimension peut être placée à la hauteur atteinte par l'aéronef au moment de la désignation du point de posé que l'aéronef survole.

Selon un aspect, ledit au moins un symbole principal en deux dimensions peut comprendre au moins trois lignes principales fermées et imbriquées les unes dans les autres, les au moins trois lignes principales étant centrées chacune sur le point de posé et positionnées à l'altitude du sol, ledit au moins un symbole principal en deux dimensions comprenant au moins quatre segments principaux convergeant vers ledit point de posé.

L'expression « imbriquées les unes dans les autres » signifie que chaque ligne entoure une autre ligne et/ou est entourée d'une autre ligne. Dès lors, une deuxième ligne est entourée par une première ligne et entoure une troisième ligne.

Les lignes peuvent être localisées dans un même plan reposant sensiblement sur le sol.

Cette symbologie en deux dimensions peut permettre à un pilote de visualiser où se trouve le point de posé par rapport à lui, notamment lorsque ce point de posé ne figure plus dans son champ de visualisation.

Selon un exemple, chaque ligne principale représente un cercle, chaque segment principal s'étendant selon un rayon du cercle.

Eventuellement, les segments principaux sont équirépartis angulairement autour du point de posé. Par exemple, la symbologie peut comprendre quatre segments principaux répartis tous les 90 degrés, six segments principaux répartis tous les 60 degrés...

Les cercles ont alors une forme qui converge vers le point de posé, de même que les segments principaux.

Les lignes fermées et les divers segments peuvent présenter des dimensions fixes. Par exemple, en présence de cercle chaque cercle peut présenter un diamètre prédéterminé, éventuellement fonction du diamètre d'un rotor de l'aéronef.

Selon un aspect, chaque segment principal peut s'étendre d'une première extrémité jusqu'à une deuxième extrémité, la première extrémité étant positionnée sur la seule ligne principale qui n'est pas entourée par une autre ligne principale, la deuxième extrémité n'atteignant pas le point de posé, un symbole principal comprenant une forme centrale éventuellement en H positionnée sur le point de posé entre les deuxièmes extrémités des segments principaux.

Eventuellement, une forme centrale en H peut être dirigée selon l'axe d'arrivée d'une trajectoire d'approche. Le H est positionné au point de posé, voire centré sur le point de posé, et orienté selon l'axe d'arrivée déterminé par ledit calculateur embarqué pour illustrer l'orientation de cet axe d'arrivée. Une telle forme en H comporte alors deux « barres verticales » reliées par une « barre horizontale », la « barre horizontale » étant sensiblement perpendiculaire à une projection dudit axe d'arrivée sur le sol, les « barres verticales » étant sensiblement parallèles à cette projection.

Selon l'invention, à chaque instant ledit symbole principal en trois dimensions comprend un trait de hauteur mobile en fonction de la hauteur courante de l'aéronef, le trait de hauteur courante étant positionné à la hauteur courante de l'aéronef entre la zone inférieure et la zone sommitale tant que cette hauteur courante de l'aéronef est inférieure à la hauteur de sommet, le trait de hauteur étant positionné au niveau de la zone sommitale du symbole principal en trois dimensions tant qu'une hauteur de l'aéronef est supérieure ou égale à la hauteur de sommet.

Par exemple, un trait coulisse au sein du symbole principal en trois dimensions pour indiquer à un pilote la hauteur de l'aéronef. Un tel trait peut prendre la forme d'un anneau coulissant par exemple.

Selon un aspect, lorsque ladite zone inférieure du symbole principal en trois dimensions n'apparait plus dans le champ de visualisation et au moins lorsque l'aéronef est situé à une distance inférieure à une deuxième distance seuil du point de posé, le procédé peut comporter une étape d'affichage sur ledit écran et dans ledit axe de visée d'un symbole secondaire en trois dimensions, non superposé au point de posé, qui s'étend de bas en haut à partir du sol selon une représentation graphique visuellement différente d'une représentation graphique du symbole principal en trois dimensions, le symbole secondaire présentant un trait mobile en fonction de la hauteur de l'aéronef.

Par exemple, le symbole secondaire a la même forme que le symbole principal en trois dimensions et est toujours affiché dans l'axe du regard du pilote. Par contre, ces deux symboles sont visuellement différents. Ainsi, le symbole secondaire peut avoir la forme d'un cône secondaire inversé dessiné avec des traits discontinus voire des pointillés alors que le symbole principal en trois dimensions prend la forme d'un cône inversé dessiné avec des traits continus.

Par exemple, chaque cône s'élargit lorsque l'aéronef se rapproche du sol.

Le symbole secondaire fournit alors visuellement une information de hauteur et de roulis de l'aéronef au pilote.

Selon un aspect, lorsque chaque symbole principal n'apparait plus dans le champ de visualisation et au moins lorsque l'aéronef est situé à une distance inférieure à une deuxième distance seuil du point de posé, ladite deuxième distance seuil étant inférieure à la première distance seuil, le procédé peut comporter une étape d'affichage d'au moins un tronçon d'au moins trois lignes secondaires fermées centrées sur le point de posé et d'au moins un segment secondaire selon une représentation graphique visuellement différente d'une représentation graphique respectivement de lignes principales et de segments principaux dudit au moins un symbole principal en deux dimensions, les au moins trois lignes secondaires étant positionnées à l'altitude du sol autour des lignes principales, chaque segment secondaire convergeant vers le point de posé.

Les dimensions des symboles principaux sont fixes. Lorsque l'aéronef se situe à la sensiblement verticale du point de posé, à partir d'une certaine hauteur de l'aéronef les symboles principaux disparaissent du champ de visualisation du pilote.

Par suite, des symboles secondaires distincts des symboles principaux peuvent apparaître pour que le pilote sache où l'aéronef se trouve dans l'espace.

Eventuellement, chaque segment secondaire se trouve dans l'alignement d'un segment principal.

Eventuellement les symboles principaux sont dessinés avec des traits pleins, et les symboles secondaires avec des traits discontinus, voire des pointillés.

Selon un aspect, lorsque chaque symbole principal n'apparait pas dans le champ de visualisation, le procédé peut comporter une étape d'affichage sur l'écran d'une flèche orientée vers le point de posé, par exemple en bordure du champ de visualisation courant du pilote.

Le calculateur embarqué peut déterminer dans quelle direction se trouve le point de posé par rapport à l'axe de visée et peut requérir l'affichage d'une flèche positionnée selon cette direction.

Selon un aspect, le procédé peut comporter une étape d'affichage d'au moins un trait illustrant un angle de roulis de l'aéronef, ledit trait étant dans une position prédéterminée lorsque ledit aéronef est à plat.

Un tel trait peut être le trait de hauteur d'un symbole principal en deux dimensions ou d'un symbole secondaire.

Par exemple, le trait matérialisant la hauteur de l'aéronef dans le symbole principal en trois dimensions peut être à l'horizontal dans le repère de l'aéronef lorsque l'aéronef est à plat et incliné en présence d'un angle de roulis non nul.

Selon un aspect, le procédé peut comporter les étapes de :
- détermination avec le calculateur embarqué d'une pente d'approche dirigée vers le point de posé ou la zone sommitale du symbole principal en trois dimensions,
- affichage de chaque section présente dans le champ de visualisation d'au moins deux portes de passage centrées chacune sur ladite pente et matérialisant chacune une porte dans laquelle l'aéronef peut passer pour rejoindre le point de posé en suivant ladite pente, chaque porte étant tangente à un cylindre centré sur le point de posé, la porte parmi lesdites au moins deux portes de passage tangente au premier cylindre rencontré en allant de l'aéronef vers le point de posé étant une porte active et les autres portes parmi lesdites au moins deux portes de passage étant des portes inactives, ladite porte active ayant une représentation visuelle différente desdites portes inactives.

Pour atteindre le point de posé, sur requête d'un pilote le calculateur peut établir une trajectoire suivant une pente et dirigée selon l'axe d'arrivée précité. Par exemple, l'axe d'arrivée est dirigé face au vent, de manière à relier l'aéronef et le point de posé ou encore est fixé par la pilote.. La pente peut être prédéterminée, peut être établie pour atteindre le point de posé en partant de l'aéronef, peut être fixée par le pilote...

Dès lors, le calculateur embarqué génère au moins deux symboles de passage représentant des portes, par exemple trois carrés centrés chacun sur ladite pente. La taille d'un côté de chaque carré peut par exemple correspondre à 1,5 fois la taille du rotor principal si l'aéronef est un hélicoptère.

Le pilote peut renouveler autant de fois qu'il le souhaite cette opération, une trajectoire de rejointe étant à chaque fois calculée automatiquement et remplaçant la précédente.

Eventuellement, les portes sont fournies à titre d'aide uniquement. Le pilote n'est pas obligé de les franchir, aucune alarme n'étant générée si une ou plusieurs portes n'ont pas été franchies.

Selon un aspect, le procédé peut comporter une étape d'affichage sur ledit écran d'un symbole de déplacement tant que l'aéronef présente une vitesse air supérieure à un seuil prédéterminé, le symbole de déplacement représentant le vecteur vitesse de l'aéronef.

Pour suivre la pente suggérée, le pilote doit simplement piloter l'aéronef pour que le symbole de déplacement soit positionné dans les portes.

Outre un procédé, l'invention vise un aéronef muni d'un écran et d'un calculateur embarqué, le calculateur embarqué étant configuré pour appliquer ce procédé.

L'invention et ses avantages apparaîtront avec plus de détails dans le cadre de la description qui suit avec des exemples donnés à titre illustratif en référence aux figures annexées qui représentent :
- la figure 1, un schéma illustrant un aéronef selon l'invention,
- la figure 2, une vue illustrant divers symboles affichables sur un écran selon l'invention, et
- les figures 3 à 14, des vues illustrant le procédé de l'invention au travers des informations techniques affichées sur un écran.

Les éléments présents dans plusieurs figures distinctes sont affectés d'une seule et même référence.

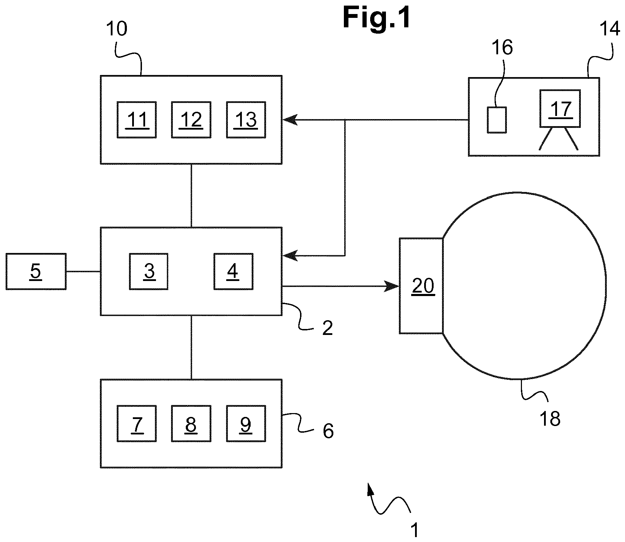

La figure 1 présente un aéronef 1 selon l'invention configuré pour pouvoir appliquer le procédé de l'invention. Cet aéronef 1 peut notamment être un aéronef apte à se poser sur une zone réduite. Notamment l'aéronef peut être un giravion. L'aéronef peut comporte au moins une voilure tournante. L'aéronef peut comprendre des réacteurs permettant un atterrissage vertical ou sensiblement vertical

L'aéronef 1 comporte un calculateur embarqué 2. Le calculateur embarqué 2 peut comprendre un ou plusieurs calculateurs, une ou plusieurs cartes électroniques.. Le calculateur embarqué 2 peut comprendre par exemple au moins un processeur 3 et au moins une mémoire 4, au moins un circuit intégré, au moins un système programmable, au moins un circuit logique, ces exemples ne limitant pas la portée donnée à l'expression « calculateur embarqué ».

Le calculateur embarqué 2 peut communiquer par une liaison filaire ou non filaire avec un senseur de position 6. Un tel senseur de position 6 transmet au calculateur embarqué 2 une information relative à la position de l'aéronef 1 dans l'espace, par exemple par rapport à un référentiel terrestre et/ou à une zone de posé.. Par exemple, un tel senseur de position peut comprendre un système de positionnement par satellites 7 et/ou une radiosonde 8 et/ou un radar ou équivalent et/ou un système optique et/ou une centrale inertielle...

Le calculateur embarqué 2 peut communiquer par une liaison filaire ou non filaire avec un capteur de vitesse 5 pour obtenir une information relative à une vitesse de l'aéronef voire pour déterminer le vecteur vitesse de l'aéronef. Un tel capteur de vitesse 5 peut comprendre un système de positionnement par satellites du senseur de position, un capteur anémométrique, une centrale inertielle...

Par ailleurs, le calculateur embarqué 2 peut communiquer par une liaison filaire ou non filaire avec un désignateur de position 10 apte à désigner un point de posé. De manière générale, le désignateur de position peut comprendre tout organe permettant d'obtenir les coordonnées d'un point de posé.

Un tel désignateur de position 10 peut comprendre par exemple un organe 11 embarqué manœuvrable par un pilote, tel qu'un bouton ou équivalent, permettant à un pilote de désigner un point de posé en passant au dessus de ce point de posé ou encore de désigner le point de posé sur un outil cartographique via une Interface Homme Machine comme un moyen tactile, visuel, gestuel ou autre. Le désignateur de position peut comprendre un organe 12 embarqué de saisie de caractères manœuvrable par un pilote, tel qu'un clavier ou une souris par exemple, permettant une saisie numérique des coordonnées du point de posé. Le désignateur de position peut comprendre un récepteur de données 13 permettant de recevoir les coordonnées du point de posé transmises par un tiers avec un émetteur distant, par exemple un tiers présent au sol ou dans un autre aéronef. Selon d'autres exemples, le désignateur de position 10 peut comprendre un système laser, un système traquant la ligne de vision d'un pilote du type connu sous l'expression anglaise « Eye Tracker » ..

Par ailleurs, l'aéronef peut embarquer un détecteur de posture 14 usuel déterminant la ligne de vision d'un pilote. Ce détecteur de posture 14 peut par exemple comprendre au moins une caméra 17 et un calculateur d'imagerie 16. Ce détecteur de posture 14 peut notamment servir de désignateur et peut transmettre au calculateur embarqué une information relative à la ligne de vision. Selon la variante, le calculateur embarqué détermine cette ligne de vision à partir d'une posture transmise par le calculateur d'imagerie ou le détecteur de posture transmet les coordonnées de la ligne de vision au calculateur embarqué.

Par ailleurs, l'aéronef comporte au moins un écran 20 affichant une symbologie à caractère technique particulière illustrant la position du point de posé cible. Un tel écran 20 peut être un écran tête haute par exemple du type d'un écran d'un casque 18 porté par un pilote, d'un moyen de projection rétinien, d'un moyen de projection sur parebrise, ou d'un afficheur tète haute connu sous l'expression anglaise « Head Up display ». L'écran peut être transparent pour afficher des données techniques en superposition du monde réel.

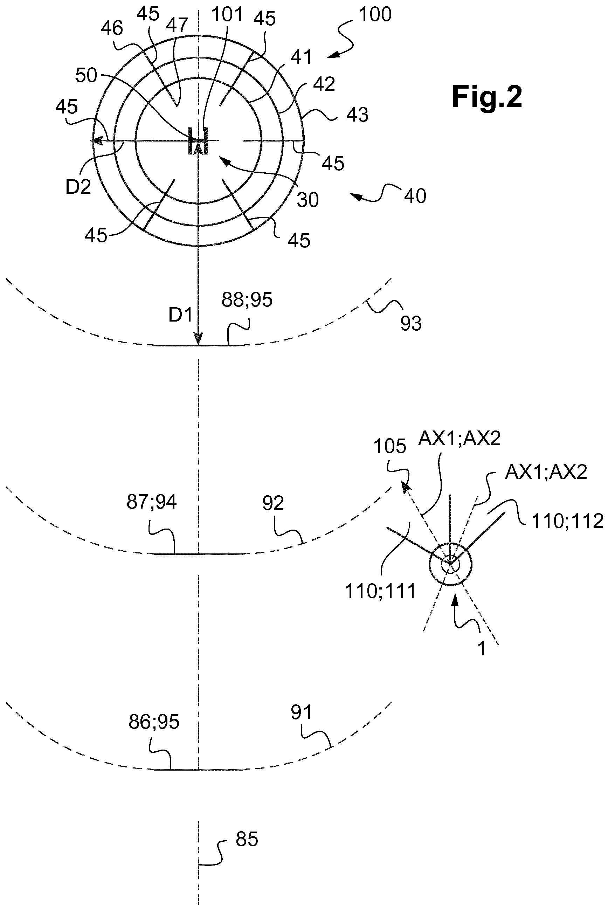

En référence à la figure 2, le calculateur embarqué 2 détermine la position de symboles principaux 30, 40 dans l'espace, éventuellement de symboles secondaires non illustrés sur la figure 2, et éventuellement de portes de passage 86, 87, 88.

Les symboles principaux 30,40 peuvent comprendre un unique symbole principal 30 en trois dimensions marquant une position conforme du point de posé 101, et donc un unique symbole principal 30 en trois dimensions présentant un point localisé au niveau du point de posé 101.

De plus, les symboles principaux 30, 40 peuvent comprendre au moins un symbole principal 40 en deux dimensions représentant la zone cible 100 visée pour un atterrissage.

Ainsi, des symboles principaux 40 en deux dimensions peuvent prendre la forme d'au moins deux voire trois lignes principales 41, 42, 43 fermées et imbriquées les unes dans les autres. Chaque ligne principale 41, 42, 43 peut former un cercle et les cercles peuvent être concentriques. Selon un autre exemple, Chaque ligne principale 41, 42, 43 peut former un polygone ..

En outre, chaque ligne principale 41, 42, 43 peut être centrée sur le point de posé 101 et positionnée à l'altitude du sol. Dès lors, chaque ligne forme bien un motif en deux dimensions.

De manière complémentaire ou alternative, des symboles principaux 40 en deux dimensions peuvent prendre la forme d'au moins quatre segments principaux 45 qui convergent tous vers le point de posé 101.

Eventuellement, les segments principaux et les lignes principales sont présents dans un même plan. En outre, chaque segment principal 45 s'étend d'une première extrémité 46 jusqu'à une deuxième extrémité 47. La première extrémité 46 est éventuellement positionnée sur la seule ligne principale 43 qui n'est pas entourée par une autre ligne principale 41, 42. La deuxième extrémité 47 peut éventuellement ne pas atteindre le point de posé 101.

Selon une réalisation illustrée par la suite, les lignes principales forment des cercles concentriques, les segments principaux s'étendant radialement vers le point de posé à partir du cercle ayant le plus grand diamètre.

Par ailleurs, un autre symbole principal 40 en deux dimensions peut dessiner les contours d'une forme 50 centrale, par exemple une forme en H, en X... Cette forme centrale est positionnée sur le point de posé 101 et éventuellement entre les deuxièmes extrémités 47 des segments principaux 45.

En fonction de la position de l'aéronef ou de l'inclinaison de la tète du pilote par exemple, les divers symboles sont affichés en totalité ou partiellement sur un écran 20 en superposition du monde réel dans le cas d'un écran transparent ou en superposition d'une représentation du monde réel.

Par ailleurs, le calculateur embarqué peut éventuellement calculer les coordonnées de portes de passage 86, 87, 88 matérialisant une trajectoire possible pour rejoindre le point de posé 101. Le calculateur embarqué peut éventuellement calculer les coordonnées d'au moins deux portes de passage 86, 87, 88, par exemple au moins deux ou trois portes de passage. Eventuellement, les portes de passage peuvent être parallèles entre elles.

Chaque porte de passage peut être tangente à un cylindre centré sur le point de posé 101. Chaque cylindre peut présenter un rayon égal à une distance prédéterminée multipliée par un nombre entier. Par exemple, la première porte de passage 86 est tangente à un cylindre 91 présentant un rayon égal à trois fois la distance prédéterminée, la deuxième porte de passage 87 est tangente à un autre cylindre 92 présentant un rayon égal à deux fois la distance prédéterminée et une troisième porte de passage 88 est tangente à un autre cylindre 93 présentant un rayon égal à la distance prédéterminée.

En outre, la porte de passage tangente au premier cylindre rencontré en allant de l'aéronef vers le point de posé est une porte active 94 et les autres portes sont des portes inactives 95. Selon l'exemple de la figure 2 la deuxième porte 87 est une porte active 94.

La porte active 94 peut avoir une représentation visuelle différente des portes inactives 95. Par exemple la porte active est dessinée avec des traits plus épais et / ou d'une autre couleur que les portes inactives.

Dès lors, le calculateur embarqué détermine un axe de visée AX1 et un champ de visualisation 110 aligné sur l'axe de visée. Le calculateur embarqué transmet alors un signal à l'écran pour afficher la partie éventuelle du symbole principal en trois dimensions présente dans le champ de visualisation en lui conférant la forme vue selon l'axe de visée, les portions éventuelles de symboles principaux en deux dimensions présentes dans le champ de visualisation en leur conférant les formes vues selon l'axe de visée, le tronçon éventuel de chaque porte de passage présente dans le champ de visualisation en lui conférant la forme vue selon l'axe de visée.

Selon une variante, l'axe de visée AX1 peut être confondu avec un axe de déplacement AX2 aligné selon le vecteur vitesse 105 de l'aéronef, le champ de visualisation étant alors le champ de visualisation 110 contenant cet axe de visée. Seuls les éléments présents dans ce champ de visualisation sont alors affichés. La première porte et la deuxième porte ne sont notamment pas affichées.

Selon une autre variante, l'axe de visée AX1 peut être confondu avec la ligne de vision AX3 du pilote, le champ de visualisation correspondant alors au champ de visualisation 112 du pilote. Selon l'exemple de la figure 2, aucun symbole principal et aucune porte ne sont alors affichées.

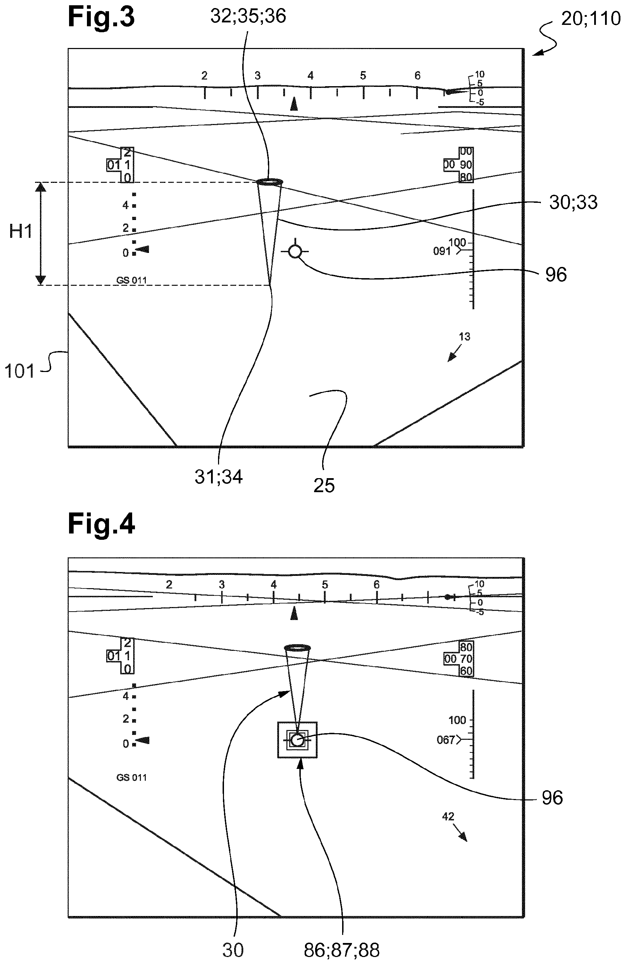

Les figures 3 à 15 illustrent le procédé selon l'invention en présentant les informations affichées sur l'écran 20.

En référence à la figure 3, le procédé comporte une étape de désignation du point de posé en utilisant le désignateur de position 10. Le point de posé peut être paramétré par le pilote ou transmis à l'aéronef à partir de l'extérieur de l'aéronef.

Le calculateur embarqué estime l'axe de visée et affiche sur l'écran 20 en superposition du monde réel ou d'une représentation du monde réel chaque partie du symbole principal 30 contenue dans le champ de visualisation 110. Dès que ledit point de posé est validé, une symbologie dédiée apparait alors sur l'écran à la position validée et superposée au monde extérieur pour montrer où se trouve le point de posé et éventuellement fournir une indication de hauteur et de roulis de l'aéronef.

A cet effet, le symbole principal 30 en trois dimensions s'étend en élévation du sol 25 vers le haut d'une zone inférieure 31 reposant sur le sol 25 jusqu'à une zone sommitale 32 positionnée à une hauteur de sommet H1 par rapport au sol 25.

La zone inférieure 31 peut être réduite à un point positionné au point de posé 101.

La surface de la zone sommitale 32 peut être calculée par le calculateur embarqué en fonction de la précision du système de localisation par satellites par exemple. La zone sommitale 32 peut être positionnée à une hauteur de sommet H1 du sol. Cette hauteur de sommet H1 peut être fixe le long de l'approche et égale à une hauteur prédéterminée ou à une hauteur de l'aéronef au moment de la désignation du point de posé 101.

Par exemple, le symbole principal 30 en trois dimensions est un cône principal 33 inversé. Dès lors, ce cône principal 33 s'étend de bas en haut d'un sommet 34 du cône principal 33 formant la zone inférieure 31 jusqu'à une base 35 formant la zone sommitale 32.

Le symbole principal 30 en trois dimensions est affiché selon une première charte graphique. Cette première charte graphique peut consister à utiliser des traits continus fins uniquement.

À chaque instant le symbole principal 30 en trois dimensions comprend un trait de hauteur 36 mobile en fonction de la hauteur de l'aéronef 1. Lorsque le symbole principal 30 en trois dimensions a une forme de cône à base circulaire, le trait de hauteur a une forme de cercle et correspond à une intersection entre le cône et un plan parallèle à la base.

Ce trait de hauteur est affiché selon une deuxième charte graphique différente de la première charte graphique. Cette deuxième charte graphique peut consister par exemple à utiliser uniquement des traits continus épais pour bien distinguer le trait de hauteur des autres traits du symbole principal 30 en trois dimensions.

Le calculateur embarqué positionne le trait de hauteur 36 entre la zone inférieure 31 et la zone sommitale 32 et à la hauteur courante de l'aéronef tant que la hauteur courante de l'aéronef est inférieure à la hauteur de sommet H1. Par contre et conformément à la représentation de la figure 3, le trait de hauteur 36 est positionné au niveau de la zone sommitale 32 du symbole principal 30 en trois dimensions tant que la hauteur de l'aéronef est supérieure ou égale à la hauteur de sommet H1.

Dès lors, le symbole principal 30 en trois dimensions et le trait de hauteur fournissent quelle que soient les conditions de visibilité non seulement la position conforme du point de posé à atteindre, mais également une information de hauteur de l'aéronef relativement au terrain, voire une information d'attitude de l'aéronef relativement au terrain illustrée par la suite.

Par ailleurs, le calculateur embarqué peut déterminer l'orientation du vecteur vitesse de l'aéronef par des méthodes usuelles. Durant une étape d'affichage, le calculateur embarqué peut commander l'écran 20 pour afficher un symbole de déplacement 96 représentant ce vecteur vitesse au moins tant que l'aéronef présente une vitesse air supérieure à un seuil prédéterminé. A basse vitesse, à savoir en dessous du seuil prédéterminé, le calcul de la vitesse air peut être relativement peu précis. Par suite, cette caractéristique consiste à ne pas afficher un symbole représentant un vecteur vitesse peu précis pour limiter les informations affichées afin de faciliter le travail d'analyse du pilote.

Par ailleurs, l'écran peut être commandé pour afficher des données usuelles, telles qu'un cap, une vitesse air..

En référence à la figure 4, le pilote peut piloter l'aéronef pour le positionner à l'endroit, en général face au vent, d'où le pilote souhaite débuter la descente vers le point de posé désigné. Après validation d'un point de départ en sollicitant une commande manuelle ou vocale ou encore tactile ou autre, le calculateur embarqué calcule une pente d'une trajectoire dite par commodité « de rejointe » pour rejoindre le point de posé ou le cas échéant la zone sommitale du symbole principal 30 en trois dimensions. Le pilote peut renouveler plusieurs fois cette étape, une nouvelle trajectoire de rejointe étant calculée à chaque itération. Eventuellement, le pilote n'est pas tenu de suivre cette trajectoire de rejointe, la trajectoire de rejointe étant illustrée à titre informatif uniquement pour aider si besoin le pilote.

Le calculateur peut par exemple calculer la pente d'une droite reliant l'aéronef au point de posé, peut utiliser une pente mémorisée, ou peut utiliser un angle de pente paramétré par le pilote.

Dès lors, le calculateur embarqué calcule la position d'au moins deux portes de passages 86, 87, 88, et en particulier trois portes de passage selon cet exemple. Ces portes de passage 86, 87, 88 sont données à titre indicatif. Eventuellement, aucune alarme n'est générée si une ou plusieurs porte(s) de passage n'ont pas été franchies.

Chaque porte de passage peut être positionnée en fonction d'un distance mémorisée séparant horizontalement la porte de passage et le point de posé, et peut être centrée sur la pente calculée, par exemple. Dès lors, le calculateur peut transmettre un signal à l'écran pour afficher chaque section des portes de passage présentes dans le champ de visualisation 110.

Dans le cas d'une phase d'approche nominale suivant la trajectoire calculé, les trois portes de passage sont imbriquées les unes dans les autres.

Pour suivre, s'il le souhaite, cette trajectoire aisément, le pilote doit seulement piloter l'aéronef afin que le symbole de déplacement 96 soit positionné dans la porte active.

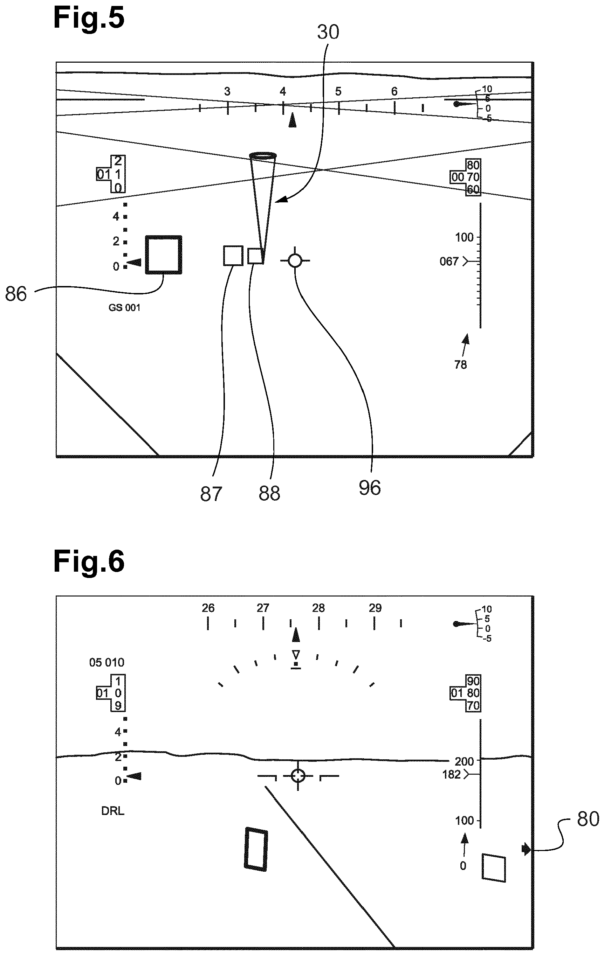

En référence à la figure 5, la forme des divers symboles affichés, et notamment des portes de passage est recalculée en fonction du positionnement relatif de l'axe de visée et de ces symboles.

En référence à la figure 6, si le point de posé voire si tous les symboles principaux en trois ou deux dimensions ne se trouvent plus dans le champ de visualisation, le calculateur embarqué peut calculer une direction selon laquelle se trouve le point de posé et peut transmettre un signal à l'écran pour afficher une flèche 80 dirigée vers le point de posé 101.

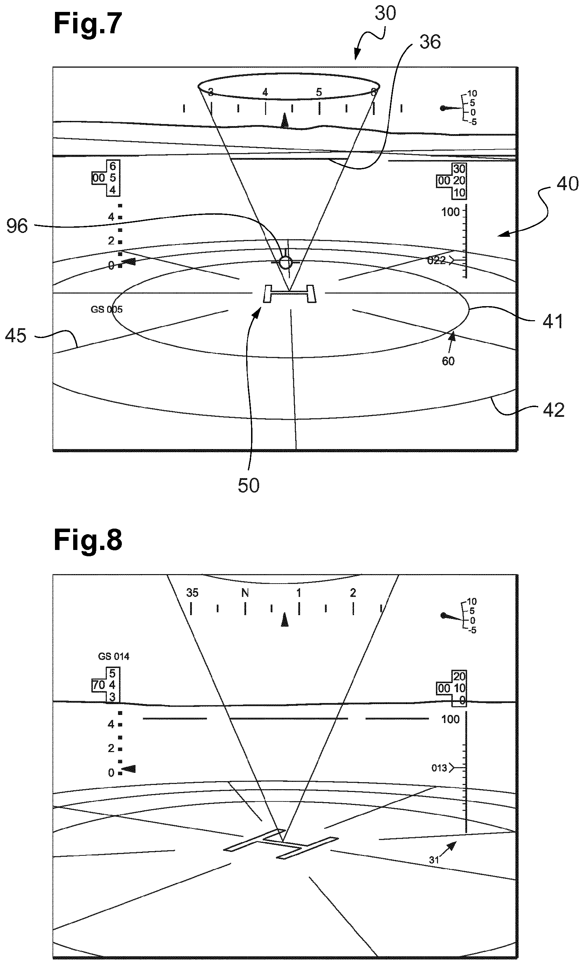

En référence à la figure 7, au moins lorsque l'aéronef 1 est situé à une distance inférieure à une première distance seuil D1 du point de posé 101, le calculateur embarqué calcule la position des symboles principaux 40 en deux dimensions et transmet un signal à l'écran pour afficher sur l'écran 20 chaque portion des symboles principaux 40 en deux dimensions présentes dans le champ de visualisation 110.

A titre d'exemple, la première distance seuil D1 peut être une distance fixe mémorisée, une distance fonction des dimensions du disque rotor d'un giravion, la distance séparant le point de posé de la porte de passage la plus proche...

Eventuellement, les symboles principaux 40 en deux dimensions apparaissent progressivement, sous le forme d'un fondu.

Le cas échant la forme centrale 50 peut être dirigée selon l'axe d'approche de la pente théorique.

En outre, la figure 7 illustre le fait que le trait de hauteur 36 se déplace dans le symbole principal en trois dimensions en se rapprochant du point de posé à mesure que l'aéronef se rapproche du sol. De plus, l'orientation de la forme centrale 50 en H fournit au pilote l'orientation de l'axe d'arrivée prédéterminé par le calculateur. Sur la figure 7 l'axe courant est correct.

Si un nuage de particules se forme, les informations affichées permettent au pilote de savoir précisément et facilement ou se trouve l'aéronef par rapport au point de posé choisi.

En référence à la figure 8, le pilote réduit la vitesse de déplacement de l'aéronef à proximité du sol. Dès lors, le symbole de déplacement 96 encore visible sur la figure 7 disparait. Le pilotage, très proche du posé peut s'effectuer uniquement via les symboles affichés tracés artificiellement en superposition du monde réel ou d'une représentation du monde réel, ces symboles se déplaçant et étant modifiés suivant la position relative de l'aéronef par rapport au point de posé. Par ailleurs, sur cette figure 8, la forme centrale 50 en H est tournée vers la gauche. Le pilote peut en déduire que l'axe d'approche de l'aéronef est mal positionné par rapport à l'axe d'arrivée prédéterminé par le calculateur. Charge alors au pilote d'effectuer une correction s'il le juge utile.

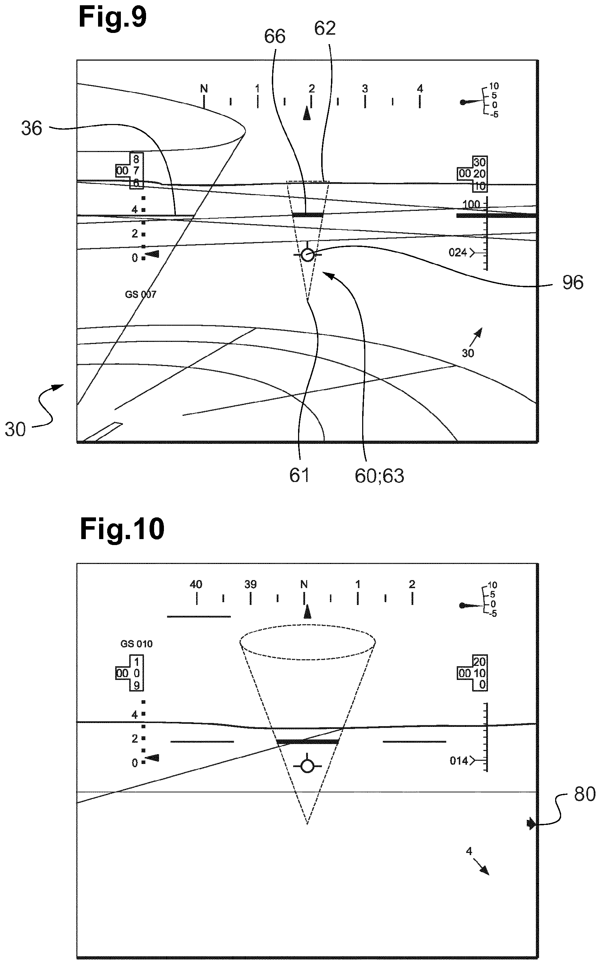

En référence à la figure 9, lorsque la zone inférieure du symbole principal 30 en trois dimensions n'apparait plus dans le champ de visualisation 110 et au moins lorsque l'aéronef 1 est situé à une distance inférieure à une deuxième distance seuil D2 du point de posé 101, le calculateur calcule la forme et l'emplacement d'un symbole secondaire 60 en trois dimensions et transmet un signal à l'écran pour afficher ce symbole secondaire 60 en trois dimensions dans l'axe de visée, tracé en pointillés ---, et toujours affiché dans l'axe de visualisation du pilote. Le symbole secondaire n'apparait que lorsque le symbole primaire a disparu.

A titre d'exemple, la deuxième distance seuil D2 peut être une distance fixe mémorisée, une distance fonction des dimensions du disque rotor d'un giravion, la distance séparant le point de posé de la ligne principale la plus éloignée...

Le symbole secondaire 60 en trois dimensions peut avoir une même forme que le symbole principal 30 en trois dimensions, une forme conique selon les exemples décrits.

Néanmoins, le symbole secondaire 60 en trois dimensions peut avoir une représentation graphique visuellement différente d'une représentation graphique du symbole principal 30 en trois dimensions Le symbole secondaire 60 en trois dimensions est affiché selon une troisième charte graphique. Par exemple, cette troisième charte graphique peut consister à utiliser des traits discontinus fins uniquement.

De plus, le symbole secondaire 60 en trois dimensions présentant un trait 66 mobile en fonction de la hauteur de l'aéronef 1. Ce trait mobile peut être par contre affiché selon la même charte graphique que le trait de hauteur pour ne pas perturber le pilote.

Le symbole secondaire 60 en trois dimensions continue à fournir des informations à la fois d'attitude relative et d'altitude quelles que soient les conditions de visibilité extérieures lorsque l'aéronef est décalé par rapport au point de posé.

Le pilote contrôle l'aéronef, comme il le souhaite, en fonction de sa position par rapport au point de posé illustrée via les différents symboles.

En outre, le symbole de déplacement 96 réapparait dès que le module du vecteur vitesse-air redevient supérieur à un seuil.

Par ailleurs et en référence à la figure 10, une flèche 80 est calculée et apparait lorsque chaque symbole principal 30, 41, 42, 43, 45 n'apparait pas dans le champ de visualisation 110. La flèche 80 voire le symbole secondaire 60 en trois dimensions peuvent être affichés tant que l'aéronef se situe à une distance du point de posé inférieure à une distance maximale, par exemple égale à la première distance seuil D1, ou dès que le pilote aura décidé de stopper l'approche.

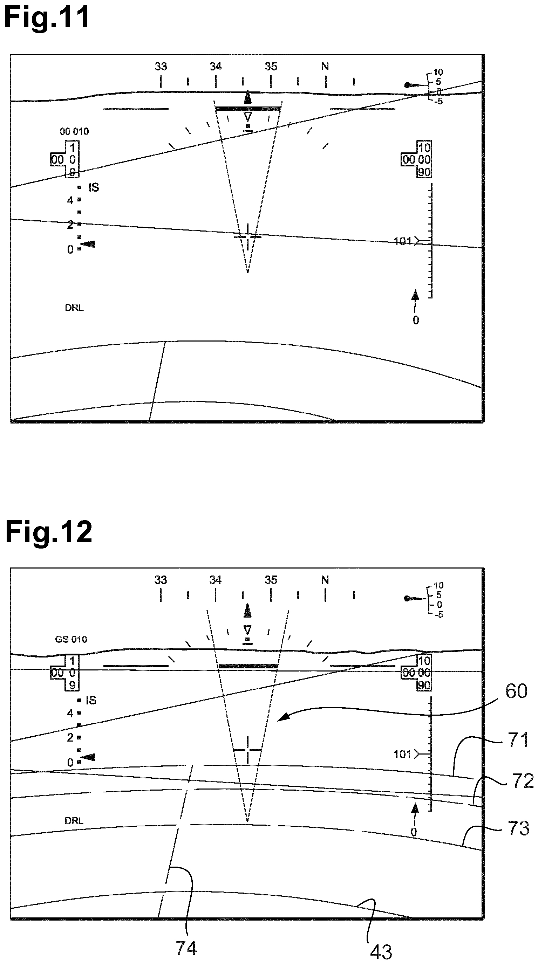

En référence à la figure 11, lorsque l'aéronef est au dessus de la zone cible mais à une hauteur relativement élevée au moins une partie des symboles principaux n'apparait plus dans le champ de visualisation.

En référence à la figure 12, lorsque chaque symbole principal 30, 41, 42, 43, 45 n'apparait plus dans le champ de visualisation 110 et au moins lorsque l'aéronef 1 est situé à une distance inférieure à une deuxième distance seuil D2 du point de posé 101, alors l'aéronef se trouve au dessus de la zone cible mais à une altitude élevée.

Pour aider le pilote à savoir où se trouve l'aéronef en présence d'une visibilité dégradée, le calculateur embarqué calcule l'emplacement d'au moins trois lignes secondaires 71, 72, 73 fermées centrées sur le point de posé 101 et d'au moins un segment secondaire 74 et transmet un signal à l'écran pour afficher chaque partie des symboles visibles dans le champ de visualisation.

Les lignes secondaires et les segments secondaires peuvent être affichés selon une quatrième charte graphique pour avoir une représentation graphique visuellement différente d'une représentation graphique respectivement des lignes principales et des segments principaux.

Les lignes secondaires 71, 72, 73 sont par exemple positionnées à l'altitude du sol autour des lignes principales 41, 42, 43 et à des distances prédéterminées du point de posé. Chaque segment secondaire 74 converge vers le point de posé 101.

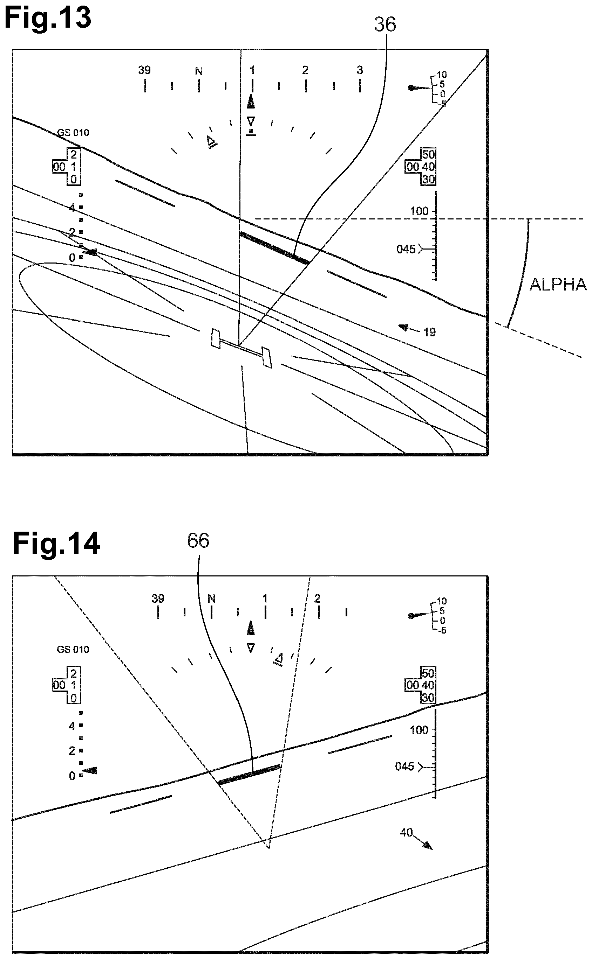

Selon un autre aspect, les figures 13 et 14 illustrent le fait que le trait de hauteur ou le trait 66 mobile permettent à un pilote d'évaluer un angle de roulis ALPHA de l'aéronef 1, ces traits devant par exemple être horizontaux lorsque ledit aéronef vole à plat.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles.

## Revendications

1. Procédé d'aide au pilotage pour atterrir sur une zone cible (100) avec un aéronef (1), le procédé comportant les étapes de :
- désignation d'un point de posé (101),
- détermination d'un axe de visée (AX1) avec un calculateur embarqué (2),
- affichage sur un écran (20) en superposition du monde réel ou d'une représentation du monde réel et dans un champ de visualisation (110) dirigé selon ledit axe de visée (AX1) d'au moins une partie d'un unique symbole principal en trois dimensions (30) fournissant une position conforme du point de posé (101) tant que ladite au moins une partie est dans le champ de visualisation (110), ledit symbole principal en trois dimensions (30) s'étendant en élévation du sol (25) vers le haut d'une zone inférieure (31) positionnée sur le sol (25) jusqu'à une zone sommitale (32) positionnée à une hauteur de sommet (H1) par rapport au sol (25), et
- au moins lorsque l'aéronef (1) est situé à une distance inférieure à une première distance seuil (D1) du point de posé (101), affichage sur l'écran (20) d'au moins une portion d'au moins un symbole principal en deux dimensions (40) tant que ladite au moins une portion est dans le champ de visualisation (110), ledit au moins un symbole principal en deux dimensions (40) couvrant ladite zone cible (100) le procédé étant en outre **caractérisé en ce qu'**à chaque instant ledit symbole principal en trois dimensions (30) comprend un trait de hauteur (36) mobile en fonction de la hauteur courante de l'aéronef (1), le trait de hauteur (36) étant positionné à la hauteur courante de l'aéronef entre la zone inférieure (31) et la zone sommitale (32) tant que cette hauteur courante de l'aéronef est inférieure à la hauteur de sommet (H1), le trait de hauteur (36) étant positionné au niveau de la zone sommitale (32) du symbole principal en trois dimensions (30) tant qu'une hauteur de l'aéronef est supérieure ou égale à la hauteur de sommet (H1).

2. Procédé selon la revendication 1,
**caractérisé en ce que** le procédé comporte une étape de détermination d'une ligne de vision (AX3) d'un pilote dudit aéronef (1) avec un détecteur de posture (14), ledit axe de visée (AX1) étant confondu avec ladite ligne de vision (AX3).

3. Procédé selon l'une quelconque des revendications 1 à 2, **caractérisé en ce que** ledit symbole principal en trois dimensions (30) comporte un cône principal (33) inversé, ledit cône principal (33) s'étendant de bas en haut d'un sommet (34) du cône principal (33) formant la zone inférieure (31) jusqu'à une base (35) formant la zone sommitale (32).

4. Procédé selon l'une quelconque des revendications 1 à 3, **caractérisé en ce que** ladite hauteur de sommet (H1) est égale à une hauteur prédéterminée ou à une hauteur de l'aéronef au moment de ladite désignation du point de posé (101).

5. Procédé selon l'une quelconque des revendications 1 à 4, caractérisé en ce ledit au moins un symbole principal en deux dimensions (40) comprend au moins trois lignes principales (41, 42, 43) fermées et imbriquées les unes dans les autres, les au moins trois lignes principales (41, 42, 43) étant centrées chacune sur le point de posé (101) et positionnées à l'altitude du sol, ledit au moins un symbole principal en deux dimensions (40) comprenant au moins quatre segments principaux (45) convergeant vers ledit point de posé (101).

6. Procédé selon la revendication 5,
**caractérisé en ce que** chaque segment principal (45) s'étend d'une première extrémité (46) jusqu'à une deuxième extrémité (47), la première extrémité (46) étant positionnée sur la seule ligne principale (43) qui n'est pas entourée par une autre ligne principale (41, 42), la deuxième extrémité (47) n'atteignant pas le point de posé (101), ledit au moins un symbole principal en deux dimensions (40) comprenant une forme centrale (50) étant positionnée sur le point de posé (101) entre les deuxièmes extrémités (47) des segments principaux (45).

7. Procédé selon la revendication 6,
**caractérisé en ce que** ladite forme centrale a une forme en H qui est positionnée au point de posé et qui est orientée selon un axe d'arrivée déterminé par ledit calculateur embarqué.

8. Procédé selon l'une quelconque des revendications 1 à 7, **caractérisé en ce que** lorsque ladite zone inférieure (31) du symbole principal en trois dimensions (30) n'apparait plus dans le champ de visualisation (110) et au moins lorsque l'aéronef (1) est situé à une distance inférieure à une deuxième distance seuil (D2) du point de posé (101), le procédé comporte une étape d'affichage sur ledit écran (20) et dans ledit axe de visée (AX1) d'un symbole secondaire en trois dimensions (60) non superposé au point de posé qui s'étend de bas en haut à partir du sol selon une représentation graphique visuellement différente d'une représentation graphique du symbole principal en trois dimensions (30), le symbole secondaire en trois dimensions (60) présentant un trait (66) mobile en fonction de la hauteur courante de l'aéronef (1).

9. Procédé selon l'une quelconque des revendications 1 à 8, **caractérisé en ce que** lorsque chaque symbole principal (30, 40, 41, 42, 43, 45) n'apparait plus dans le champ de visualisation (110) et au moins lorsque l'aéronef (1) est situé à une distance inférieure à une deuxième distance seuil (D2) du point de posé (101), ladite deuxième distance seuil (D2) étant inférieure à la première distance seuil (D1), le procédé comporte une étape d'affichage d'au moins un tronçon d'au moins trois lignes secondaires (71, 72, 73) fermées centrées sur le point de posé (101) et d'au moins un segment secondaire (74) selon une représentation graphique visuellement différente d'une représentation graphique respectivement de lignes principales (41, 42, 43) et de segments principaux (45) dudit au moins un symbole principal en deux dimensions (40), les au moins trois lignes secondaires (71, 72, 73) étant positionnées à l'altitude du sol autour des lignes principales (41, 42, 43), chaque segment secondaire (74) convergeant vers le point de posé (101).

10. Procédé selon l'une quelconque des revendications 1 à 9,
**caractérisé en ce que** lorsque chaque symbole principal (30, 40, 41, 42, 43, 45) n'apparait pas dans le champ de visualisation (110), le procédé comporte une étape d'affichage sur l'écran d'une flèche (80) orientée vers le point de posé (101).

11. Procédé selon l'une quelconque des revendications 1 à 10,
**caractérisé en ce que** ledit procédé comporte une étape d'affichage d'au moins un trait (36, 66) illustrant un angle de roulis (ALPHA) de l'aéronef (1), ledit trait (36, 66) étant dans une position prédéterminée lorsque ledit aéronef est à plat.

12. Procédé selon l'une quelconque des revendications 10 à 11,
**caractérisé en ce que** ledit procédé comporte les étapes de :
- détermination avec le calculateur embarqué (2) d'une pente (85) d'approche dirigée vers le point de posé (101) ou la zone sommitale (32) du symbole principal en trois dimensions (30),
- affichage de chaque section présente dans le champ de visualisation (110) d'au moins deux portes (88, 86, 87) de passage centrées chacune sur ladite pente (85) et matérialisant chacune une porte dans laquelle l'aéronef (1) peut passer pour rejoindre le point de posé en suivant ladite pente, chaque porte (86, 87, 88) étant tangente à un cylindre (91, 92, 93) centré sur le point de posé (101), la porte parmi lesdites au moins deux portes (86, 87, 88) de passage tangente au premier cylindre rencontré en allant de l'aéronef vers le point de posé étant une porte active (94) et les autres portes parmi lesdites au moins deux portes de passage étant des portes inactives (95), ladite porte active (94) ayant une représentation visuelle différente desdites portes inactives (95).

13. Procédé selon l'une quelconque des revendications 10 à 11,
**caractérisé en ce que** ledit procédé comporte une étape d'affichage sur ledit écran (20) d'un symbole de déplacement (96) tant que l'aéronef présente une vitesse air supérieure à un seuil prédéterminé, le symbole de déplacement (96) représentant le vecteur vitesse (105) de l'aéronef (1).

14. Aéronef (1) muni d'un écran (20) et d'un calculateur embarqué (2),
**caractérisé en ce que** ledit calculateur embarqué (2) est configuré pour appliquer le procédé selon l'une quelconque des revendications à 1 à 13.

## Patentansprüche

1. Verfahren zur Unterstützung des Piloten bei der Landung auf einem Zielareal (100) mit einem Luftfahrzeug (1), wobei das Verfahren die folgenden Schritte umfasst:
- Bezeichnen eines Landepunkts (101),
- Bestimmen einer Sichtachse (AX1) mit einem Bordrechner (2),
- überlagertes Anzeigen, auf einem Bildschirm (20), der der realen Welt oder einer Darstellung der realen Welt und, in einem Sichtfeld (110), das entlang der Sichtachse (AX1) ausgerichtet ist, von mindestens einem Teil eines eindeutigen dreidimensionalen Hauptsymbols (30), das eine konforme Position des Landepunkts (101) liefert, solange sich der mindestens eine Teil im Sichtfeld (110) befindet wobei das dreidimensionale Hauptsymbol (30) sich in der Höhe vom Boden (25) nach oben von einem unteren Bereich (31), der auf dem Boden (25) positioniert ist, zu einem Scheitelbereich (32) erstreckt, der in einer Scheitelhöhe (H1) relativ zum Boden (25) positioniert ist, und
- zumindest dann, wenn sich das Luftfahrzeug (1) in einer Entfernung vom Landepunkt (101) befindet, die geringer ist als eine erste Schwellenentfernung (D1), Anzeigen mindestens eines Teils mindestens eines zweidimensionalen Hauptsymbols (40) auf dem Bildschirm (20), solange sich der mindestens eine Teil im Sichtfeld (110) befindet, wobei das mindestens eine zweidimensionale Hauptsymbol (40) das Zielareal (100) abdeckt,
wobei das Verfahren ferner **dadurch gekennzeichnet ist, dass** das dreidimensionale Hauptsymbol (30) zu jedem Zeitpunkt eine Höhenlinie (36) umfasst, die in Abhängigkeit von der aktuellen Höhe des Luftfahrzeugs (1) beweglich ist, wobei die Höhenlinie (36) zwischen dem unteren Bereich (31) und dem Scheitelbereich (32) auf der aktuellen Höhe des Luftfahrzeugs positioniert ist, solange diese aktuelle Höhe des Luftfahrzeugs geringer ist als die Scheitelhöhe (H1), und dass die Höhenlinie (36) im Scheitelbereich (32) des dreidimensionalen Hauptsymbols (30) positioniert ist, solange eine Höhe des Luftfahrzeugs größer oder gleich der Scheitelhöhe (H1) ist.

2. Verfahren nach Anspruch 1,
**dadurch gekennzeichnet, dass** das Verfahren einen Schritt des Bestimmens einer Sichtlinie (AX3) eines Piloten des Luftfahrzeugs (1) mit einem Haltungssensor (14) umfasst, wobei die Sichtachse (AX1) mit der Sichtlinie (AX3) übereinstimmt.

3. Verfahren nach einem der Ansprüche 1 bis 2,
**dadurch gekennzeichnet, dass** das dreidimensionale Hauptsymbol (30) einen umgekehrten Hauptkegel (33) umfasst, wobei sich der Hauptkegel (33) von einer Spitze (34) des Hauptkegels (33), die den unteren Bereich (31) bildet, nach oben zu einer Grundfläche (35) erstreckt, die den Scheitelbereich (32) bildet.

4. Verfahren nach einem der Ansprüche 1 bis 3,
**dadurch gekennzeichnet, dass** die Scheitelhöhe (H1) gleich einer vorgegebenen Höhe oder einer Höhe des Luftfahrzeugs zum Zeitpunkt der Bestimmung des Landepunkts (101) ist.

5. Verfahren nach einem der Ansprüche 1 bis 4,
**dadurch gekennzeichnet, dass** das mindestens eine zweidimensionale Hauptsymbol (40) mindestens drei ineinandergreifende geschlossene Hauptlinien (41, 42, 43) umfasst, wobei die mindestens drei Hauptlinien (41, 42, 43) jeweils auf den Landepunkt (101) zentriert und auf Bodenhöhe positioniert sind, und dass das mindestens eine zweidimensionale Hauptsymbol (40) mindestens vier Hauptsegmente (45) umfasst, die zu dem Landepunkt (101) zusammenlaufen.

6. Verfahren nach Anspruch 5,
**dadurch gekennzeichnet, dass** sich jedes Hauptsegment (45) von einem ersten Ende (46) zu einem zweiten Ende (47) erstreckt, wobei das erste Ende (46) auf der einen Hauptlinie (43) angeordnet ist, die nicht von einer anderen Hauptlinie (41, 42) umgeben ist, und das zweite Ende (47) den Landepunkt (101) nicht erreicht, und dass das mindestens eine zweidimensionale Hauptsymbol (40) eine zentrale Form (50) aufweist, die zwischen den zweiten Enden (47) der Hauptsegmente (45) auf dem Landepunkt (101) angeordnet ist.

7. Verfahren nach Anspruch 6,
**dadurch gekennzeichnet, dass** die zentrale Form eine H-Form hat, die am Landepunkt positioniert ist und die entlang einer von dem Bordcomputer bestimmten Anflugachse ausgerichtet ist.

8. Verfahren nach einem der Ansprüche 1 bis 7,
**dadurch gekennzeichnet, dass**, wenn der untere Bereich (31) des dreidimensionalen Hauptsymbols (30) nicht mehr im Sichtfeld (110) erscheint und zumindest, wenn sich das Luftfahrzeug (1) in einer Entfernung vom Landepunkt (101) befindet, die geringer ist als ein zweiter Schwellenabstand (D2), das Verfahren einen Schritt umfasst, bei dem auf dem Bildschirm (20) und in der Sichtachse (AX1) ein sekundäres dreidimensionales Symbol (60) angezeigt wird, das dem Landepunkt nicht überlagert ist und sich gemäß einer grafischen Darstellung, die sich visuell von einer grafischen Darstellung des dreidimensionalen Hauptsymbols (30) unterscheidet, vom Boden nach oben erstreckt, und
dass das sekundäre dreidimensionale Symbol (60) eine Linie (66) aufweist, die in Abhängigkeit von der aktuellen Höhe des Luftfahrzeugs (1) beweglich ist.

9. Verfahren nach einem der Ansprüche 1 bis 8,
**dadurch gekennzeichnet, dass**, wenn jedes Hauptsymbol (30, 40, 41, 42, 43, 45) nicht mehr im Sichtfeld (110) erscheint und zumindest, wenn sich das Luftfahrzeug (1) in einem Abstand vom Landepunkt (101) befindet, der kleiner als ein zweiter Schwellenabstand (D2) ist, wobei der zweite Schwellenabstand (D2) kleiner als der erste Schwellenabstand (D1) ist, das Verfahren einen Schritt umfasst, bei dem mindestens ein Abschnitt von mindestens drei auf den Landpunkt (101) zentrierten sekundären geschlossenen Linien (71, 72, 73) und mindestens ein sekundäres Segment (74) gemäß einer grafischen Darstellung angezeigt werden, die sich visuell von einer grafischen Darstellung von Hauptlinien (41, 42, 43) bzw. Hauptsegmenten (45) des mindestens einen zweidimensionalen Hauptsymbols (40) unterscheidet,
wobei die mindestens drei sekundären Linien (71, 72, 73) in Bodenhöhe um die Hauptlinien (41, 42, 43) herum angeordnet sind, wobei jedes sekundäre Segment (74) zum Landepunkt (101) konvergiert.

10. Verfahren nach einem der Ansprüche 1 bis 9,
**dadurch gekennzeichnet, dass**, wenn jedes Hauptsymbol (30, 40, 41, 42, 43, 45) nicht im Sichtfeld (110) erscheint, das Verfahren einen Schritt des Anzeigens eines auf den Landepunkt (101) gerichteten Pfeils (80) auf dem Bildschirm umfasst.

11. Verfahren nach einem der Ansprüche 1 bis 10,
**dadurch gekennzeichnet, dass** das Verfahren einen Schritt des Anzeigens mindestens einer Linie (36, 66) umfasst, die einen Rollwinkel (ALPHA) des Luftfahrzeugs (1) veranschaulicht, wobei sich die Linie (36, 66) in einer vorgegebenen Position befindet, wenn das Luftfahrzeug in der Ebene liegt.

12. Verfahren nach einem der Ansprüche 10 bis 11,
**dadurch gekennzeichnet, dass** das Verfahren die folgenden Schritte umfasst:
- Bestimmen einer auf den Landepunkt (101) oder den Scheitelbereich (32) des dreidimensionalen Hauptsymbols (30) gerichteten Anflugschräge (85) mit dem Bordrechner (2),
- Anzeigen jedes im Sichtfeld (110) vorhandenen Abschnitts von mindestens zwei Durchgangstoren (88, 86, 87), die jeweils auf der Schräge (85) zentriert sind und jeweils ein Tor darstellen, durch das das Luftfahrzeug (1) hindurchfliegen kann, um nach der Schräge den Landepunkt zu erreichen, wobei jedes Tor (86, 87, 88) einen auf den Landepunkt (101) zentrierten Zylinder (91, 92, 93) tangiert, wobei dasjenige der mindestens zwei Durchgangstore (86, 87, 88), das tangential zum auf dem Weg vom Luftfahrzeug zum Landepunkt ersten Zylinder verläuft, ein aktives Tor (94) ist, und das andere der mindestens zwei Durchgangstore ein inaktives Tor (95) ist, wobei das aktive Tor (94) eine andere visuelle Darstellung als das inaktive Tor (95) aufweist.

13. Verfahren nach einem der Ansprüche 10 bis 11,
**dadurch gekennzeichnet, dass** das Verfahren einen Schritt des Anzeigens eines Bewegungssymbols (96) auf dem Bildschirm (20) umfasst, solange das Luftfahrzeug eine Fluggeschwindigkeit über einem vorbestimmten Schwellenwert hat, und dass das Bewegungssymbol (96) den Geschwindigkeitsvektor (105) des Luftfahrzeugs (1) darstellt.

14. Luftfahrzeug (1) mit einer Anzeige (20) und einem Bordcomputer (2),
**dadurch gekennzeichnet, dass** der Bordcomputer (2) konfiguriert ist, um das Verfahren nach einem der Ansprüche 1 bis 13 anzuwenden.

## Claims

1. Piloting assistance method for landing on a target zone (100) with an aircraft (1),
the method comprising the steps of:
- designating a touchdown point (101),
- determining an axis of sight (AX1) by means of an on-board computer (2),
- displaying, on a screen (20), overlaid on the real world or on a representation of the real world and in a field of vision (110) that is directed along said axis of sight (AX1), at least one part of a single three-dimensional primary symbol (30) which provides a conformal position of the touchdown point (101) as long as said at least one part is in the field of vision (110), said three-dimensional primary symbol (30) extending in elevation from the ground (25) upwards from a lower zone (31) positioned on the ground (25) up to a summit zone (32) positioned at a summit height (H1) relative to the ground (25), and
- at least when the aircraft (1) is located at a distance smaller than a first threshold distance (D1) from the touchdown point (101), displaying, on the screen (20), at least one portion of at least one two-dimensional primary symbol (40) as long as said at least one portion is in the field of vision (110), said at least one two-dimensional primary symbol (40) covering said target zone (100),
the method further being **characterised in that**, at all times, said three-dimensional primary symbol (30) comprises a height line (36) which moves depending on the current height of the aircraft (1), the height line (36) being positioned at the current height of the aircraft between the lower zone (31) and the summit zone (32) as long as this current height of the aircraft is smaller than the summit height (H1), the height line (36) being positioned in the summit zone (32) of the three-dimensional primary symbol (30) as long as a height of the aircraft is greater than or equal to the summit height (H1).

2. Method according to claim 1, **characterised in that** the method comprises a step of determining a line of sight (AX3) of a pilot of said aircraft (1) by means of a posture sensor (14), said axis of sight (AX1) being coincident with said line of sight (AX3).

3. Method according to either claim 1 or claim 2, **characterised in that** said three-dimensional primary symbol (30) comprises an inverted primary cone (33), said primary cone (33) extending from bottom to top from an apex (34) of the primary cone (33) forming the lower zone (31) up to a base (35) forming the summit zone (32).

4. Method according to any of claims 1 to 3, **characterised in that** said summit height (H1) is equal to a predetermined height or to a height of the aircraft at the time of said designation of the touchdown point (101).

5. Method according to any of claims 1 to 4, **characterised in that** said at least one two-dimensional primary symbol (40) comprises at least three closed primary lines (41, 42, 43) which are nested one inside the other, each of the at least three primary lines (41, 42, 43) being centred on the touchdown point (101) and positioned at ground level, said at least one two-dimensional primary symbol (40) comprising at least four primary segments (45) which converge towards said touchdown point (101).

6. Method according to claim 5, **characterised in that** each primary segment (45) extends from a first end (46) to a second end (47), the first end (46) being positioned on the only primary line (43) which is not surrounded by another primary line (41, 42), the second end (47) not reaching the touchdown point (101), and said at least one two-dimensional primary symbol (40) comprising a central shape (50) positioned on the touchdown point (101) between the second ends (47) of the primary segments (45).

7. Method according to claim 6, **characterised in that** said central shape is an H-shape which is positioned at the touchdown point and which is oriented along an arrival axis determined by said on-board computer.

8. Method according to any of claims 1 to 7, **characterised in that**, when said lower zone (31) of the three-dimensional primary symbol (30) no longer appears in the field of vision (110), and at least when the aircraft (1) is located at a distance smaller than a second threshold distance (D2) from the touchdown point (101), the method comprises a step of displaying, on said screen (20) and in said axis of sight (AX1), a three-dimensional secondary symbol (60) which is not overlaid on the touchdown point and extends from bottom to top from the ground in a graphic representation that is visually different from a graphic representation of the three-dimensional primary symbol (30), the three-dimensional secondary symbol (60) having a line (66) which moves depending on the current height of the aircraft (1).

9. Method according to any of claims 1 to 8, **characterised in that**, when each primary symbol (30, 40, 41, 42, 43, 45) no longer appears in the field of vision (110), and at least when the aircraft (1) is located at a distance smaller than a second threshold distance (D2) from the touchdown point (101), said second threshold distance (D2) being smaller than the first threshold distance (D1), the method comprises a step of displaying at least one section of at least three closed secondary lines (71, 72, 73) which are centred on the touchdown point (101) and at least one secondary segment (74) in a graphic representation that is visually different from graphic representations of primary lines (41, 42, 43) and of primary segments (45) of said at least one two-dimensional primary symbol (40), the at least three secondary lines (71, 72, 73) being positioned at ground level around the primary lines (41, 42, 43), each secondary segment (74) converging towards the touchdown point (101).

10. Method according to any of claims 1 to 9, **characterised in that**, when each primary symbol (30, 40, 41, 42, 43, 45) no longer appears in the field of vision (110), the method comprises a step of displaying, on the screen, an arrow (80) oriented towards the touchdown point (101).

11. Method according to any of claims 1 to 10, **characterised in that** said method comprises a step of displaying at least one line (36, 66) illustrating a roll angle (ALPHA) of the aircraft (1), said line (36, 66) being in a predetermined position when said aircraft is not banked.

12. Method according to either claim 10 or claim 11,
**characterised in that** said method comprises the steps of:
- determining, by means of the on-board computer (2), an approach slope (85) directed towards the touchdown point (101) or the summit zone (32) of the three-dimensional primary symbol (30),
- displaying each section present in the field of vision (110) of at least two passing gates (88, 86, 87), each of which is centred on said slope (85) and represents a gate through which the aircraft (1) can pass to reach the touchdown point by following said slope, each gate (86, 87, 88) being tangential to a cylinder (91, 92, 93) centred on the touchdown point (101), the gate from among said at least two passing gates (86, 87, 88) that is tangential to the first cylinder encountered on the path from the aircraft to the touchdown point being an active gate (94), and the other gates from among said at least two passing gates being inactive gates (95), said active gate (94) having a different visual representation from said inactive gates (95).

13. Method according to either claim 10 or claim 11, **characterised in that** said method comprises a step of displaying, on said screen (20), a movement symbol (96) as long as the aircraft has an airspeed greater than a predetermined threshold, the movement symbol (96) representing the velocity vector (105) of the aircraft (1).

14. Aircraft (1) provided with a screen (20) and an on-board computer (2), **characterised in that** said on-board computer (2) is configured to implement the method according to any of claims to 1 to 13.
